Europäisches Patentamt

European Patent Office

Office européen des brevets

(19)

(11) Veröffentlichungsnummer: **0 034 137**
**A1**

(12) **EUROPÄISCHE PATENTANMELDUNG**

(21) Anmeldenummer: 81890010.2

(22) Anmeldetag: 22.01.81

(51) Int. Cl.³: **C 22 B 19/26**

(30) Priorität: 06.02.80 AT 657/80

(43) Veröffentlichungstag der Anmeldung: 19.08.81
Patentblatt 81/33

(84) Benannte Vertragsstaaten: **BE CH DE FR GB IT LI LU NL
SE**

(71) Anmelder: **VOEST-ALPINE Aktiengesellschaft,
Friedrichstrasse 4, A-1011 Wien (AT)**

(72) Erfinder: **Reiterer, Hans Detlef Dr., Sandgasse 47,
A-8010 Graz (AT)**

(74) Vertreter: **Kretschmer, Adolf, Dipl.-Ing.,
Schottengasse 3a, A-1014 Wien (AT)**

(54) **Verfahren zur hydrometallurgischen Aufbereitung von zinkhältigen Materialien.**

(57) Bei dem Verfahren zur hydrometallurgischen Aufbereitung von zinkhältigen Materialien, wie Roherzen, Sekundärrohstoffen und gerösteten Sulfatkonzentraten, unter Verwendung von basischen Lösungen, werden die zerkleinerten zinkhältigen Mineralien in einer ersten Verfahrensstufe einer basischen Laugung mit Alkalihydroxid unterworfen. Hierauf werden die Feststoffe, insbesondere die Niederschläge abgetrennt. Die verbleibende Lösung kann mit Wasser verdünnt werden und wird zur Ausfällung von $SiO_2$ auf einen pH-Wert unter 7 angesäuert. Spätestens vor der Ausfällung des $SiO_2$ werden $Cl^-$-Ionen und $NH_4^+$-Ionen in die Lösung eingebracht. Anschließend wird die $Zn^{++}$-enthaltende Lösung nach dem Abtrennen von Cu und Cd einem Ionenaustausch- und/oder Lösungsmittelextraktionsverfahren und gegebenenfalls einer elektrolytischen Reinigung unterworfen.

- 1 -

<u>Verfahren zur hydrometallurgischen Aufbereitung von zink-
hältigen Materialien.</u>

Die Erfindung bezieht sich auf ein Verfahren zur hydrometallurgischen Aufbereitung von zinkhältigen Materialien,
wie Roherzen, Sekundärrohstoffen und gerösteten Sulfaterzkonzentraten unter Verwendung von basischen Lösungen. Für
die Aufarbeitung zinkhältiger Materialien sind in erster
Linie pyrometallurgische Verfahren bekannt geworden. Derartige pyrometallurgische Verfahren sind aber nur für die
Aufarbeitung großer Mengen zinkhältiger Materialien wirtschaftlich interessant. Insbesondere für die Aufarbeitung
von Stäuben und Schlämmen, beispielsweise aus dem Hochofenprozeß, und für die Aufarbeitung zinkhältiger Abfallstoffe
besteht das Bedürfnis, einfache Verfahren zu schaffen, mit
welchen die in der Regel wesentlich geringeren Mengen an Abfallstoffen wirtschaftlich aufgearbeitet werden können. Zum
anderen sind pyrometallurgische Verfahren in hohem Maße
energieabhängig. Es sind weiters bereits naßchemische Verfahren bekanntgeworden, bei welchen entweder mit hochkonzentrierten kohlensäurefreien Ammoniaklösungen unter Druck
oder aber mit Alkalihydroxyden unter Druck und erhöhter
Temperatur gelaugt wurde. Die bekannten Verfahren sind aber
in erster Linie für Ausgangsmaterialien mit hohem Zinkgehalt
und vergleichsweise geringen Verunreinigungen geeignet und
insbesondere für die Aufarbeitung von zinkhältigen Abfällen
nur beschränkt geeignet.

Die vorliegende Erfindung zielt nun darauf ab, ein Verfahren
der eingangs genannten Art zu schaffen, mit welchem zinkhältige Stäube und Schlämme, sowie andere zinkhältige
mineralische Rohstoffe in einfacher Weise und auch bei Aufarbeitung geringer Mengen wirtschaftlich aufgearbeitet werden
können und insbesondere das enthaltene Zink, sowie gegebenenfalls andere Elemente des aufzuarbeitenden Rohmaterials rein
dargestellt werden können. Zur Lösung dieser Aufgabe besteht

- 2 -

das erfindungsgemäße naßchemische Verfahren im wesentlichen darin, daß die zerkleinerten zinkhältigen Mineralien in einer ersten Verfahrensstufe einer basischen Laugung mit Alkalihydroxid unterworfen werden, daß die Feststoffe, insbesondere die Niederschläge abgetrennt werden, und die verbleibende Lösung gegebenenfalls mit Wasser verdünnt und zur Ausfällung von $SiO_2$ auf einen pH-Wert unter 7 angesäuert wird, worauf die $Zn^{++}$-enthaltende Lösung nach dem Abtrennen von Cu und Cd einem Ionenaustausch- und/oder Lösungsmittelextraktionsverfahren und gegebenenfalls einer elektrolytischen Reinigung unterworfen wird, wobei vor der Ausfällung von $SiO_2$ durch Einstellen eines pH-Wertes von unter 7 $Cl^-$ Ionen und $NH_4^+$ Ionen in die Lösung eingebracht werden. Die zinkhältigen Mineralien können hiebei beispielsweise durch Mahlung zerkleinert werden und die basische Laugung mit Alkalihydroxid ergibt in der ersten Stufe dieses Verfahrens eine Umsetzung des Ausgangsmaterials, wobei Zink als Zinkat in Lösung geht und Eisen und Mangan als Oxihydrate bzw. Hydroxide ausgefällt werden. Durch die Trennung der Feststoffe von der verbleibenden Lösung, können auch die Elemente wie z.B. Ca, Mg, Ni, Co, Cu und Cr in einfacher Weise abgetrennt werden. Als wesentlicher Verfahrensschritt werden vor dem Ansäuern $NH_4^+$ und $Cl^-$ Ionen zugesetzt, wodurch in der Folge auch Aluminium als Hydroxid ausfällt und in der Lösung neben geringen Konzentrationen an Elementen der zweiten Hauptgruppe des Periodischen Systems der Elemente (Ca und ähnliche), lediglich Zinkat sowie Kadmium und ein Teil des Kupfers verbleiben. Der Zusatz von Ammonchlorid kann gleichzeitig mit der Laugung erfolgen, und es hat sich als vorteilhaft erwiesen, die Laugung unter Einpressen von Luft oder Sauerstoff vorzunehmen. Für den Fall, daß das aufzuarbeitende Material Blei enthält, wird mit Vorteil Ammonchlorid nicht bereits mit der Natronlauge eingesetzt, sondern erst nach einer ersten Abtrennung der verbliebenen Feststoffe bzw. Niederschläge und einer Verdünnung mit Wasser, vorzugsweise im Verhältnis von etwa 1 : 3, zugesetzt. Auf diese Weise erfolgt die Abtrennung des Aluminium erst zu einem späteren Zeitpunkt, jedoch wird durch diese Vorgangsweise ein Teil des Bleigehaltes vor dem nachfolgenden Ansäuern abgetrennt. Das Ansäuern erfolgt mit Vorteil mit Schwefelsäure, wodurch das gegebenenfalls vorhandene Blei als unlösliches Sulfat ausfällt und durch die Laugung in Lösung gegangenes $SiO_2$ wiederum ausfällt. Bei bleihältigen Stauben ist es besonders vorteilhaft, das Verfahren so durchzuführen, daß bei der Laugung NaCl vorzugsweise in einer Menge von etwa 1 kg/t Einsatzmaterial zugesetzt wird, und daß vor dem Ansäuern auf einen pH-Wert unter 7 Ammoniakwasser und/oder $NH_3$ gasförmig, vorzugsweise bis zum Erreichen eines pH-Wertes von 9,0 bis 9,3 zugesetzt bzw. eingeleitet wird, wobei vorzugsweise vor dem Einbringen von $NH_4^+$ Ionen mit einer $H_2SO_4$-hältigen Lösung, vorzugsweise einer Mischung von $HCl/H_2SO_4$ 1:4 ein pH-Wert von etwa 10 eingestellt wird. Vorzugsweise wird zur Laugung 30 %ige Natronlauge verwendet.

In einer weiteren bevorzugten Ausführungsform des erfindungsgemäßen Verfahrens wird der Feststoffgehalt der flüssigen Phase auf unter 400 g/l, vorzugsweise unter 300 g/l, gehalten. Gegebenenfalls vorhandenes Kupfer bzw. Kadmium, welches auch nach dem Ansäuern noch in Lösung vorhanden ist, kann in einfacher Weise nach dem Ansäuern durch Zementieren mit Zn-Pulver abgetrennt werden.

Erfindungsgemäß wird $NH_4Cl$ in Mengen von 150 bis 300 g/l, vorzugsweise ca. 200 g/l, zugesetzt.

Nach der Abtrennung des Kupfers bzw. Kadmiums, verbleibt im wesentlichen lediglich $Zn^{++}$ in der sauren Lösung und dieses $Zn^{++}$ kann in einfacher Weise durch Ionenaustausch und/oder Lösungsmittelextraktion angereichert werden, wobei im Falle eines Ionenaustauschverfahrens ein stark saurer Ionenaustauscher Verwendung findet. Die entsprechend angereicherte $Zn^{++}$-Lösung kann einer Gewinnungselektrolyse zugeführt werden.

- 4 -

Das erfindungsgemäße Verfahren wird an Hand der nachfolgenden Ausführungsbeispiele näher erläutert. In Tabelle 1 sind hiebei die chemischen Analysen eines ersten zinkhältigen Materials enthalten. Tabelle 2 zeigt die Abhängigkeit des Zinkausbringens von der Laugungszeit. In Tabelle 3 sind die chemischen Analysen eines weiteren zinkhältigen Materials angegeben und in Tabelle 4 ist das Zinkausbringen aus dem Ausgangsmaterial gemäß Tabelle 3 in Prozent in Abhängigkeit von der Laugungszeit in Stunden zusammengestellt.

Beispiel 1:

Tabelle 1  Versuchsrohstoff A          Chemische Analyse

| Element | % |
|---|---|
| Fe | 44,2 |
| Mn | 16,9 |
| Zn | 3,3 |
| Al | 2,5 |
| Ca | 20,0 |
| Mg | 1,2 |
| Cu | 0,1 |
| Na | 1,0 |
| K | 0,9 |
| $SiO_2$ | 5,2 |
| $CO_2$ | 3,9 |

Tabelle 2  Zn-Ausbringung aus Versuchsrohstoff A (100 g Einsatz)

| Laugungszeit (h) | Zn (g) |
|---|---|
| 0,5 | 2,75 |
| 1,0 | 2,98 |
| 2,0 | 3,12 |
| 3,0 | 3,25 |
| 4,0 | 3,25 |
| 5,0 | 3,25 |

Beispiel 2:

Tabelle 3    Versuchsrohstoff B         Chemische Analyse

| Element | % |
|---|---|
| FeO | 38,6 |
| MnO | 4,0 |
| $SiO_2$ | 2,1 |
| CaO | 6,3 |
| MgO | 1,8 |
| $Al_2O_3$ | 3,0 |
| ZnO | 37,2 |
| CuO | 0,1 |
| $P_2O_5$ | 0,1 |
| $SO_3$ | 3,5 |
| Glühverlust | 2,9 |

Tabelle 4    Zn-Ausbringung aus Versuchsrohstoff B

| Laugungszeit | % Zn |
|---|---|
| 1 | 80,2 |
| 2 | 85,0 |
| 3 | 88,7 |
| 4 | 91,9 |
| 5 | 93,9 |
| 6 | 96,0 |
| 7 | 96,8 |
| 8 | 97,3 |
| 9 | 97,7 |
| 10 | 98,1 |
| 15 | 98,2 |

Beispiel 3:

Die Laugung der Pulpe erfolgte in einer 30 %igen Natronlauge unter Einpressen von Luft (Sauerstoff), wobei ein Feststoffgehalt von 300 g/l nicht überschritten wurde. Bei schwer laugbaren Substanzen kann eine Temperatur- bzw. Druckerhöhung vorgenommen werden. Anschließend wird vom Unlaugbaren und von gebildeten Niederschlägen (Fe, Mn, Ni, Co, Cu, Cr) abgetrennt und die möglichst klare Lösung mit Wasser auf das dreifache Volumen verdünnt.

Nach Zusatz von festem Ammoniumchlorid (ca. 200 g/l) fallen Aluminium und Blei als Hydroxide aus und können abgetrennt werden. Eventuell in Lösung befindliches Silikat wird durch den nächsten Verfahrensschritt, einer Ansäuerung ($H_2SO_4$), gefällt. Ebenso wird dadurch restliches Blei entfernt.

Die verbleibende, nunmehr saure Lösung wird zwecks einer Kupfer-Kadmium-Zementation mit Zn-Pulver versetzt und kann nach Abfiltrieren von den Feststoffen in der Anreicherungsstufe weiterverarbeitet werden.

Alle während des beschriebenen Prozesses anfallenden Feststoffe und Niederschläge können als Grundlagen für weitere Gewinnungsverfahren dienen.

Einsatzmenge 308 g Rohmaterial

Chemische Analyse

| Element | % |
|---|---|
| FeO | 64,80 |
| MnO | 0,12 |
| ZnO | 14,28 |
| CuO | 2,77 |
| $Al_2O_3$ | 0,29 |
| MgO | 2,82 |
| CaO | 3,13 |
| $SiO_2$ | 5,33 |
| $SO_3$ | 2,71 |
| Glühverlust | 2,56 |

Pulpe: 308 g Feststoff; Korngröße < 70 μm

700 ml NaOH 30 %

Laugungszeit: $4^h$

Temperatur: $35^oC$

Rührgeschwindigkeit: 500 UpM

Laugungsrückstand: 232,9 g (trocken)

Chemische Analyse

| Element | % |
|---------|-----|
| FeO | 85,70 |
| MnO | 0,16 |
| MgO | 3,73 |
| CaO | 3,65 |
| $SiO_2$ | 5,05 |

Filtrat:

Chemische Analyse

| Element | g/l |
|---------|-------|
| Zn | 57,73 |
| Cu | 11,13 |
| Al | 0,77 |

| | |
|---|---|
| Verdünnungswassermenge: | 1500 ml |
| $NH_4Cl$ fest: | 400 g |
| $Al(OH)_3$ ($105^{O}C$ getrocknet) | 2,48 g |
| $H_2SO_4$ (95 %ig) | 300 g |
| Zn-Pulver | 20 g |
| Cu-Fällung | 6,74 g |
| Einsatz Solventextraktion | ~23 Zn |
| angereicherte Zn-Lösung | ~40 Zn |
| Extraktionsmittel | Aliquat 336 (General Mills Inc. Henkel (corp.) (methyl-quarternisiertes Alamin, $(CH_3)_4N^+ R$) |

Der wichtigste Teilschritt des Verfahrens ist der Zusatz von Ammonchlorid, wobei die wesentlichen Vorteile des hydro-metallurgischen Aufarbeitungsverfahrens in der guten Trennmöglichkeit des Zink von den übrigen Bestandteilen des Ausgangsmaterials bestehen. Das Verfahren ist besonders bei geringerem Anfall von Schlämmen und Stäuben bzw. mineralischen Rohstoffen anwendbar und zeichnet sich neben seiner Flexibilität in Bezug auf die Wahl des Rohstoffes durch Umweltfreundlichkeit und sparsamen Energieverbrauch aus. Die verwendeten Chemikalien können teilweise im Kreislauf geführt werden.

Beispiel 4:

Dem Laugungsgemisch wurde ca. 1 kg pro Tonne Einsatzmaterial Natriumchlorid beigefügt. Bei der nachfolgenden Fest-Flüssig-Trennung wurden vor allem Fe, Mn, Ni, Co, Cu, Cr, Edelmetalle und seltene Erden ausgebracht. Nach dem Verdünnen wurde der pH-Wert mit Hilfe eines Gemisches $HCl/H_2SO_4$ 1:4 auf ca. 10 gestellt, wobei $PbSO_4$ ausfällt. Die Aluminiumfällung erfolgte durch Zugabe von Ammoniakwasser bzw. durch Einleiten von Ammoniakgas bis zum Erreichen eines pH von 9,0 bis 9,3.

Das endgültige Ansäuern des Filtrates aus der Aluminiumfällstufe wurde mit Hilfe eines Säuregemisches $HCl/H_2SO_4$ 1:4 durchgeführt. Hiebei fallen $SiO_2$ und gegebenenfalls verbliebenes Pb aus. Anschließend wurde wie bei den vorangehenden Beispielen beschrieben, vorgegangen.

| | |
|---|---|
| Rohmaterialeinsatz: | 300 g |
| Chemische Analyse: | wie in Beispiel 3 |
| Pulpe | 300 g Feststoff;Korngröße 70 μm |
| | 900 ml 30%ige NaOH; 0,33 g NaCl |
| Laugungszeit: | 4 h |
| Laugungstemperatur: | $35^{o}C$ |
| Rührgeschwindigkeit: | 500 UpM |
| Laugungsrückstand: | 227 g |
| Filtratvolumen: | 305 ml |
| Filtratinhalt: | 42,75 g/l Zn |
| | 8,25 g/l Cu |
| | 0,57 g/l Al |
| Verdünnungswasser: | 1600 ml |
| $H_2SO_4/HCl$ | 4 : 1 |
| Zn-Pulver | 20 g |
| Cu-Fällung | 6,53 g |
| Zn-Konzentration Solventextraktion-Eingang: | 42,75 g/l |
| Keine Anreicherung | |

Extraktionsmittel: Aliquat 336 (General Mills Inc. -Henkel Corp.)

Patentansprüche:

1. Verfahren zur hydrometallurgischen Aufbereitung von zinkhältigen Materialien, wie Roherzen, Sekundärrohstoffen und
gerösteten Sulfatkonzentraten, unter Verwendung von
basischen Lösungen,
dadurch gekennzeichnet,
daß die zerkleinerten zinkhältigen Mineralien in einer
ersten Verfahrensstufe einer basischen Laugung mit Alkalihydroxid unterworfen werden, daß die Feststoffe, insbesondere die Niederschläge abgetrennt werden, und die verbleibende Lösung gegebenenfalls mit Wasser verdünnt und
zur Ausfällung von $SiO_2$ auf einen pH-Wert unter 7 angesäuert wird, worauf die $Zn^{++}$-enthaltende Lösung nach dem
Abtrennen von Cu und Cd einem Ionenaustausch- und/oder
Lösungsmittelextraktionsverfahren und gegebenenfalls einer
elektrolytischen Reinigung unterworfen wird, wobei vor der
Ausfällung von $SiO_2$ durch Einstellen eines pH-Wertes von
unter 7 $Cl^-$Ionen und $NH_4^+$Ionen in die Lösung eingebracht
werden.

2. Verfahren nach Anspruch 1,
dadurch gekennzeichnet,
daß vor dem Ansäuern auf einen pH-Wert unter 7 $NH_4Cl$ der
flüssigen Phase zugesetzt wird.

3. Verfahren nach Anspruch 1,
dadurch gekennzeichnet,
daß bei der Laugung NaCl vorzugsweise in einer Menge von
etwa 1 kg pro Tonne Einsatzmaterial zugesetzt wird, und daß
vor dem Ansäuern auf einen pH-Wert unter 7 Ammoniakwasser
und/oder $NH_3$ gasförmig, vorzugsweise bis zum Erreichen
eines pH-Wertes von 9,0 bis 9,3 zugesetzt bzw. eingeleitet
wird.

4. Verfahren nach Anspruch 3,

dadurch gekennzeichnet,

daß vor dem Einbringen von $NH_4^+$Ionen mit einer $H_2SO_4$-hältigen Lösung, vorzugsweise einer Mischung von $HCl/H_2SO_4$ 1:4 ein pH-Wert von etwa 10 eingestellt wird.

5. Verfahren nach einem der Ansprüche 1 bis 4,

dadurch gekennzeichnet,

daß die Laugung unter Einpressen von Luft oder Sauerstoff erfolgt.

6. Verfahren nach einem der Ansprüche 1 bis 5,

dadurch gekennzeichnet,

daß zur Laugung 30 %ige Natronlauge verwendet wird.

7. Verfahren nach einem der Ansprüche 1 bis 6,

dadurch gekennzeichnet,

daß der Feststoffgehalt der flüssigen Phase auf unter 400 g/l, vorzugsweise unter 300 g/l, gehalten wird.

8. Verfahren nach einem der Ansprüche 1 oder 2,

dadurch gekennzeichnet,

daß $NH_4Cl$ in Mengen von 150 bis 300 g/l, vorzugsweise ca. 200 g/l, zugesetzt wird.

9. Verfahren nach einem der Ansprüche 1, 2 oder 8,

dadurch gekennzeichnet,

daß bei Vorliegen bleihältiger Mineralien $NH_4Cl$ nach der basischen Laugung einer ersten Abtrennung der verbleibenden Feststoffe bzw. Niederschläge und einer Verdünnung mit Wasser, vorzugsweise im Verhältnis von etwa 1:3, zugesetzt wird, und daß vor dem nachfolgenden Ansäuern die ausfallenden Niederschläge abgetrennt werden.

10. Verfahren nach einem der Ansprüche 1 bis 9,

dadurch gekennzeichnet,

daß der pH-Wert mit verdünntem $H_2SO_4$, vorzugsweise mit

einer Mischung HCl/H$_2$SO$_4$ 1:4 unter 7 eingestellt wird.

11. Verfahren nach einem der Ansprüche 1 bis 10,
    dadurch gekennzeichnet,
    daß das Abtrennen von Cu und Cd nach dem Ansäuern durch
    Zementieren mit Zn-Pulver vorgenommen wird.

1981 01 08 sm

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | DE - B - 1 816 351 (TENNESSEE CORP.) | | C 22 B 19/26 |
| A | FR - A - 2 062 546 (RUHR-ZINK) & DE - A - 1 948 411 | | |
| A | FR - A - 1 464 869 (DET NORSKE ZINKKOMPANI) & DE - A - 1 483 156 | | |
| | ---- | | |

**RECHERCHIERTE SACHGEBIETE (Int. Cl.³)**

C 22 B 19/00
19/20
19/22
19/24
19/26

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-05-1981 | JACOBS |